# EUROPEAN PATENT SPECIFICATION

(11) **EP 1 892 516 B1**
(45) Date of publication and mention of the grant of the patent: **03.10.2018**
(21) Application number: 07112798.9
(22) Date of filing: 19.07.2007
(51) Int. Cl.: G01N 35/00, G01N 15/02

(54) **Impactor automation**
Impinger-Automatisierung
Automatisation d'un impacteur

(30) Priority: 24.08.2006 GB 0616779
(43) Date of publication of application: 27.02.2008
(73) Proprietor: Astech Projects Ltd, Runcorn, Cheshire WA7 1TQ (GB)
(72) Inventor: Bridge, Michael, James, Runcorn, Cheshire WA7 1TQ (GB); Harvey, Dominic, Ewan, Runcorn, Cheshire WA7 1TQ (GB); Hansford, Christopher, Ian, Runcorn, Cheshire WA7 1TQ (GB)
(74) Representative: Hutchinson, Thomas Owen

(56) References cited:
- EP-A- 1 471 344
- WO-A-2007/120700

## Description

The present invention is concerned with automation of tests carried out using a cascade impactor.

Cascade impactors are in themselves well known. They are used to analyse particle size distribution in aerosols. A particularly important application is in the testing of inhalers - devices used to dispense a controlled pharmaceutical dose into the mouth and lungs of a patient. Inhalers are used to treat asthma and other conditions. The pharmaceutical drug is typically in powdered or liquid form, much of its bulk being made up of a carrier and only a small percentage by the active ingredient. In use the patient releases a controlled dose of the powder or liquid using a mechanical arrangement such as a trigger lever. The patient, then draws it into the lungs by sucking. Penetration of the drug - and hence of the active ingredient itself - into the lungs is affected by particle size, so during manufacture it is necessary to verify, by testing of sample inhalers, that a suitable particle size distribution is being achieved. The cascade impactor is used for this purpose.

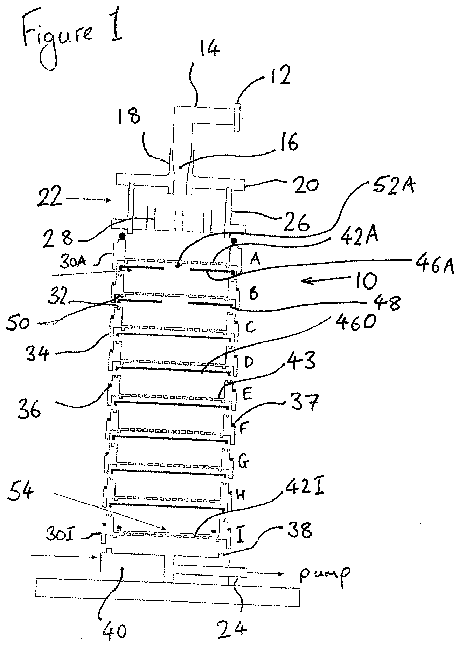

A widely used type of impactor, known in the trade as the Andersen impactor, is illustrated in Figure 1 and will be described below. It comprises multiple separable stages which locate one upon another to form a cylindrical conduit through which a test sample is drawn. The sample is supplied to an impactor inlet, formed e.g. as a mouthpiece, at one end of the conduit formed by the stages, and a partial vacuum is applied to the other end to draw through the impactor an aerosol containing the sample. The internal formation of the impactor causes material with successively diminishing particle size to collect in the impactor stages. This material is then recovered from the internal surfaces of the cascade impactor.

This has typically been a manual process involving disassembly of the impactor and then rinsing of each component with solvent. The solvent/sample resulting from rinsing of each component is separately collected for analysis. The manual process is labour intensive.

There have been previous attempts to automate sample recovery with an Andersen type impactor, but these have suffered from shortcomings. US patent 6915714 (Sanderson et al) describes one such system, which uses upper and lower clamping plates, coupled in clam shell fashion, to define a set of chambers arranged side-by-side in which the impactor components are placed. Recovery of the sample material is by circulation of solvent through the chambers. The process of disassembling the impactor is not considered. Similar comments apply with regard to prior art document EP 1471344 (Glaxo Group Limited).

Aspects of the invention are set forth in the appended independent claims. Preferred or optional features are set forth in the appended dependent claims.

Preferably, the arm members are slidably supported on at least one elongate guide member extending in the direction of the said axis.

Preferably, the device further comprises a lead screw, a rotary lead screw drive, and at least one traveller which engages the lead screw so as to be moved along the lead screw by rotation of it.

Preferably, the device is adapted to receive the impactor with its axis at least substantially upright, at least some of the arm members having an extensible coupling to their neighbouring arm member, the extensible coupling being constructed to accommodate some relative motion of the neighbouring arm members but to prevent them from moving apart more than a maximum distance, so that raising the top-most arm member causes arm members beneath it to be suspended from it through the extensible couplings, and thereby to be separated from each other.

Preferably, the extensible coupling comprises an elongate coupling member which is coupled to one arm member and is movably received by the other, the elongate coupling member having a stop feature which limits its movement relative to the said other arm member to define the said maximum distance.

Preferably, the elongate coupling member is a pin with an enlarged head received in a bore in the said other arm member.

Preferably, the device is mounted for rotation about the said axis, or about an axis substantially parallel to the said axis, the stage bodies being offset from the rotational axis so that by rotary movement of the device the stage bodies are movable from one processing station to another.

Preferably, the device further comprises a support platform for supporting the assembled impactor from beneath, the support platform being provided with a conduit connectable to a vacuum source to cause the aerosol to be drawn through the impactor.

Preferably, each recovery chamber is connectable to a closed loop incorporating a pump for recirculating liquid through the recovery chamber in any direction to promote dissolution in the liquid of material collected upon the said working surfaces.

Preferably, the device further comprises multiple closed loops each incorporating at least one recovery chamber.

Preferably, the device further comprises means for dispensing a controlled dose of liquid into the closed loop.

Preferably, the device further comprises a valve arrangement for diverting the liquid from the closed loop to a collection vessel.

Preferably, the device is mounted on a power-driven tilting platform to enable it to be inclined to cause liquid in the recovery chambers to flow toward fluid outlets from the recovery chambers.

Preferably, at least one of the upper and lower receptacle parts is spring mounted, so that when the upper and lower receptacle parts are brought together the spring mounting(s) bias them toward each other.

Preferably, the recovery stages are separated along the direction of relative motion of the upper and lower receptacle parts.

Preferably, the device further comprises a movable support member which carries either the upper or the lower receptacle parts.

Preferably, the support member is movable by means of a vertical drive.

Preferably, the device is for use with hollow cylindrical impactor stage bodies, in which at least one of the upper and lower receptacle members has a space saver projection surrounded by the peripheral sealing surface, the projection being insertable into the impactor stage body by the relative motion of the upper and lower receptacle parts.

Preferably, both the upper and lower receptacle parts are provided with actuators for causing them to move toward/away from each other.

Preferably, the actuator associated with at least one of the upper and lower parts is pneumatic.

Preferably, the expander device is mounted for rotation and provided with a powered drive, enabling it to move the impactor stages along a circular path to and from a recovery station.

Preferably, the system is for use with a cascade impactor of the type in which the impactor stages have respective impaction plates supportable upon respective impactor stage bodies, the aforementioned recovery station being a stage body recovery station for recovering material collected on the stage bodies and the system further comprising a plate recovery station and a plate handling device comprising multiple plate handling arms separated from each other along the axial direction, each plate handling arm having means for engaging a respective impaction plate, the plate handling device thus being adapted to engage multiple impaction plates and to move them concurrently to the plate recovery station.

Preferably, the plate handling arms are commonly mounted upon a rotary platform provided with a powered drive.

Preferably, the system further comprises a plate coating station for applying a coating to the impaction plates.

Preferably, the plate coating station has multiple supports for receiving multiple impaction plates, the supports being separated along the axial direction.

Preferably, the plate coating station is arranged to receive the plates from the plate handling device.

Preferably, the plate coating station comprises at least one spray head for spray coating the impaction plates.

Preferably, the system further comprises a firing arrangement for firing a dispensing device into the impactor, the firing arrangement comprising an automated mechanical arrangement for presenting the dispensing device to a mouthpiece of the cascade impactor, a pump for providing a partial vacuum, and an arrangement of valves and conduits for connecting the pump to an outlet of the cascade impactor to cause air to be drawn through the impactor and the device.

Preferably, the system further comprises an automated mechanism for actuating a trigger arrangement of the dispensing device, to release a pharmaceutical dose from it.

Preferably, the system further comprises a store for multiple dispensing devices, a movable platform for carrying a dispensing device, and an automated manipulation arrangement for collecting a dispensing device from the store and locating it at the platform.

Preferably, the store comprises a carousel with multiple device-receiving locations at intervals around its periphery, so that by rotating the carousel different device-receiving locations are made available to the automated manipulation arrangement.

Preferably, the system further comprises a waste firing station for firing unwanted doses from the dispensing device, the said platform being arranged to move the device between the waste firing station and the firing arrangement.

Preferably, the system further comprises a throat recovery station and a handling system for removing a throat from the cascade impactor and conveying it to the throat recovery station.

Preferably, the system further comprises a preseparator recovery station, the handling system being suitable for removing a preseparator from the cascade impactor and conveying it to the preseparator recovery station.

Preferably, the or each recovery station defines multiple recovery chambers and each recovery chamber is connectable to a closed fluid circuit comprising a fluid reservoir, a pumping device and one or more recovery chambers, enabling fluid to be circulated around the closed loop, via the reservoir and recovery chamber(s), to cause collected material to pass into the liquid and be homogenised.

Preferably, the system further comprises an arrangement for supplying a controlled quantity of liquid to the closed circuit.

Preferably, the arrangement for supplying a controlled quantity comprises a metered displacement type pump.

Preferably, the reservoir has an inlet and an outlet, the inlet being higher than the outlet and being above a level to which the reservoir if filled, and the pumping device and/or associated valves being controllable to circulate the liquid around the closed loop in a forward direction for material collection and homogenisation, the liquid passing into the reservoir through the inlet and out through the outlet, and in a reverse direction for discharge of the liquid, causing liquid to be withdrawn from the outlet without being drawn in through the inlet.

Preferably, each support is movable along an X axis, the supports being separated from each other along a Y axis.

Preferably, the spray head is movable along the Y axis.

Specific examples of the present invention will now be described, by way of example only, with reference to the accompanying drawings, in which:
Figure 1 is a somewhat stylised view, in axial section, of a known cascade impactor;
Figure 2 is a plan view of a system embodying the present invention;
Figure 3 is a plan view of a device transfer unit and waste firing subsystem of the system;
Figure 4 is a plan view of cascade impaction and recovery subsystems;
Figures 5a and 5b are axial sections through an expander unit used in the recovery subsystem, the two drawings showing this unit in two different configurations;
Figures 6a-6c are respectively a plan view from beneath, a plan view from above, and a sectional view along lines A-A of plate-handling arms used in the recovery subsystem;
Figures 7a-7d are respectively
   (a) a longitudinal section,
   (b) a front view,
   (c) a rear view, and
   (d) a plan view
   of a stage recovery device used in the recovery subsystem;
Figures 8a-8d are respectively
   (a) a longitudinal section,
   (b) a front view,
   (c) a rear view, and
   (d) a plan view
   of a plate recovery device used in the recovery subsystem;
Figures 9a-9d are respectively
   (a) a rear view,
   (b) a longitudinal section,
   (c) a front view, and
   (d) a plan view
   of a plate coating station used in the recovery subsystem;
Figures 10-19 are schematic representations, in plan, of a second form of recovery subsystem, showing the subsystem in different configurations to illustrate its mode of operation;
Figure 20 is a schematic representation of a fluid circuit used in the recovery subsystem.

The cascade impactor 10 illustrated in Figure 1 is of a well-known and widely commercially available type known as an Andersen impactor. In use, a sample inhaler (omitted from this drawing) is presented to an elastomer (specifically rubber) mouthpiece 12 at the opening of a tubular throat 14, formed as an elbowed metal part with a frusto-conical taper 16 at its end remote from the mouthpiece, the taper forming a sealed friction fit in a complementarily shaped inlet tube 18 of a lid 20 of a preseparator 22. Air is drawn through the inhaler and the impactor, via the throat, by means of a conduit 24 connected to a vacuum pump, which again is omitted from this drawing. The air passing through the impactor thus contains a dose of pharmaceutical from the inhaler.

The largest particles in the dose are typically bulking material such as lactose, and are collected in the preseparator 22. The preseparator comprises a cylindrical preseparator body 26 which receives the lid 20 and within which is supported a removable preseparator vessel 28 which is partially filled with a solvent. The preseparator vessel 28 is open toward the inlet tube 18. In use, air flows through the preseparator around the outside of the preseparator vessel 28, but the larger of the particles entrained in the air flow, due to their momentum, impinge upon and are collected in the liquid in the preseparator vessel 28.

Beneath the preseparator is a set of collection stages A-I, arranged one above (and hence upstream of) another, which serve to collect particles of progressively diminishing size. Each collection stage comprises:
1. An annular stage body 30A-I. The stage bodies rest one upon the next and together define, when assembled together, a tubular conduit through which air passes. Each is shaped to locate upon and seal against its neighbours, having at its base an annular cut-away which defines a shoulder 32 to rest upon the body below and a downwardly projecting locating wall 34. Upwardly facing shoulders 36 in the outer surface of each stage body 30 receive elastomeric "O" rings 37 which, when the collection stages of the impactor are suitably biased together, form seals against ingress of air. The bottommost stage body 301 locates upon a circular projection 38 of a base plate 40.
2. A stage filter 42 A-I supported on a ledge 43 within the respective stage body 30A-I. The stage filters are each formed by a circular, sintered metal plate with a large number of through-going apertures. From top to bottom of the impactor, the filters are progressively finer. That is, the apertures in the filters are progressively smaller and more numerous.
3. An impaction plate 46A-I formed as a circular metal plate with a downwardly turned outer lip 48. The lip of each impaction plate is supported in a circular recess 50 of the stage body beneath it.

Note that the path through each stage for airflow is somewhat convoluted, leading through the stage filter 42 and around the outside of the impaction place 46, through the annular space between the impaction plate and the adjacent locating wall 34. The top two stages A and B also provide for air passage through a central aperture 52A,B in the impaction plate 46A,B and in these stages the portion of the filter above the aperture is continuous - i.e. it has no apertures. Due to their momenta, the particles in the airflow tend, after passing through the filter, to proceed onto the impaction plate and be collected there, rather than following the convoluted path taken by the air, and each impaction place collects successively smaller particles. The impaction plates 46A-I may be coated to improve adhesion and collection of the particles. A back-up filter 54 in the lowermost stage I prevents escape of the finest particles from the sample.

Material collected on the impaction plates 46, the filters 42, the interiors of the stage bodies 30 and in the throat 14 and the preseparator 22 needs to be recovered for analysis.

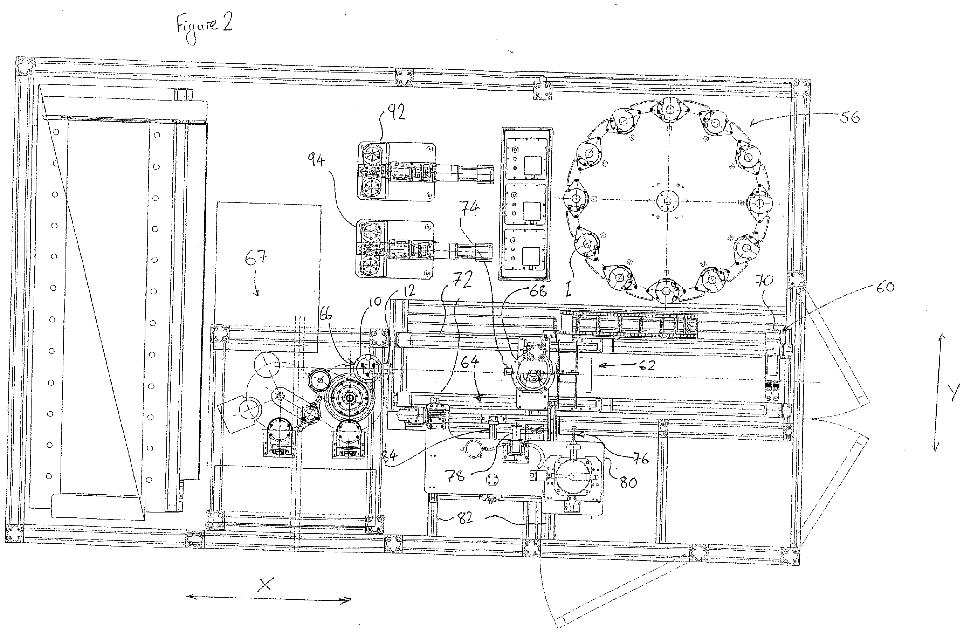

The system to be described below serves to automate the operation of the impactor and the recovery of the collected material from it. Very briefly summarised, with particular reference to Figure 2, it comprises a store, formed in this embodiment as a carousel 56 for storing devices 1 to be tested, which in this embodiment are inhalers used for treatment of asthma although of course inhalers may be used in treatment of a range of other diseases. A device dispensing unit 60 is used to take the devices from the carousel to a device transfer unit 62. Each device contains multiple pharmaceutical doses and only a small selection of these is tested using the impactor. The rest are fired into a waste firing subsystem 64. When the selected number of waste doses has been fired, the device is conveyed on the transfer unit to a collection subsystem 66 and is fired into the cascade impactor 10. A recovery subsystem 67 carries out the disassembly of the cascade impactor 10 and the recovery of the material captured in it. The operation of all of these functions is automated, and the system is controlled by a means of a microprocessor-based device and more specifically, in the present embodiment, a personal computer.

Each of these aspects of the system will now be described, in turn, in greater detail.

The carousel 56 carries enough devices to allow the system to run for a protracted period - e.g. overnight - without being manually restocked with devices. It consists of a rotary table indexable between several positions (twelve, in the illustrated embodiment) by an electromechanical drive. At each position the carousel is shaped to receive and locate a removable cassette containing multiple devices 1. In the present embodiment ten devices can be stored in each cassette. An empty cassette is placed at one position, to provide for uploading of devices after testing. Hence the illustrated carousel can store 110 devices for testing. Cassettes are manually filled prior to their installation in the system, with access for loading/removing the devices being through the open top of the cassette. A slot runs the length of each cassette, as seen in the drawing, to expose the devices' mouthpieces and to aid removal of the device from the cassette. The cassette contains guide rails to locate each device in the illustrated orientation, mouth outward. In use, when a cassette has been emptied the rotary table is advanced to present a fresh cassette to the device dispensing unit 60.

The device dispensing unit 60 is used to move devices from the carousel to the device transfer unit 62. It is a servo driven two axis slide arrangement movable along the Y axis (which is marked Figure 2) to advance/retract it relative to the carousel, and along the Z axis (perpendicular to the plane of the paper, in Figure 2) to enable it to move to the height of the chosen device (the topmost in the cassette) and to raise it to remove the device from the carousel. The device dispensing unit 60 has an end effector 70 in the form of a vacuum cup for picking and placing the devices 1. The Z axis incorporates an optical sensor used to verify that there is a device at the chosen location, and that the device has been picked up by the end effector.

In operation, the end effector 70 is placed upon a flat of the device and a vacuum is applied to securely retain the device, which is then lifted out of the cassette and placed upon platform 68 of the device transfer unit 62. Other means may be used to lift the device.

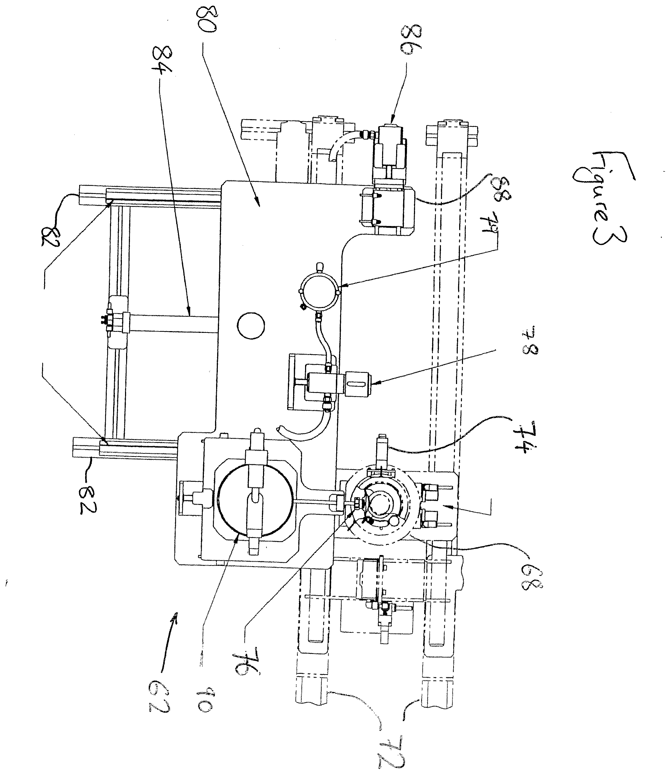

The device transfer unit 62 is best seen in Figure 3 and rides on a linear slide way 72 aligned along the X-axis (whose direction is marked on the drawing). The device transfer platform 68 is movable along the linear slide way by a servo drive under software control. The device transfer unit also carries a rate testing utility mouthpiece 74, whose purpose will be explained shortly. The device transfer platform 68 incorporates a device firing mechanism. As noted above, the inhaler devices 1 have a mechanical, user operable mechanism for releasing the pharmaceutical dose to be inhaled. This mechanism can take a variety of forms, but in the illustrated devices it has a trigger lever movable about a vertical axis (i.e. an axis perpendicular to the plane of the paper, in Figure 2) to release the pharmaceutical. The firing mechanism (not clearly seen in the drawings) comprises a firing pin to engage the trigger lever and a servo drive. A torque transducer is used to measure the firing torque.

The device transfer platform 68 is carried upon a rotary table for rotating it - and the device 1 carried upon it - through 90 degrees, enabling the device mouthpiece to be presented to different subsystems. The device transfer unit is adapted to move the device between four positions:
(1) a device dispensing position, for receiving the device from the device dispensing unit 60;
(2) a waste dose collection position, in which the device mouthpiece is presented to a waste fire mouthpiece 76;
(3) an airflow resistance (AFR) position, in which the device mouthpiece is presented to an AFR mouthpiece 78; and
(4) a testing position, in which the device mouthpiece is presented to the mouthpiece 12 of the cascade impactor 10. Note that this requires the device 1 to be rotated through 90 degrees relative to the other positions, using the rotary table.

Also, the device transfer unit has two further positions, to locate the utility mouthpiece 74 respectively against the waste fire mouthpiece 76 and the AFT testing position.

The servo drive of the device transfer platform 68 is controllable to selectively provide both (a) position control, which is used to move the platform to positions 1, 2, and 3 and (b) torque control (i.e. torque control of the rotary drive, or equivalently control over the linear force upon the platform) which is used in position 4 to urge the device mouthpiece against the impactor mouthpiece 12 with a chosen force (in this embodiment 30 Newtons) to provide a leak proof seal between the mouthpieces.

To avoid excessive movement of the device 1 during firing and testing, respective releasable overhead pneumatic clamps (not seen in the drawings) are provided. These clamps urge the device against the platform 68 whilst it is in each of positions 2-4.

The components of the system seen in Figure 3, and particularly the waste firing subsystem 64, perform the preparation of the device 1 prior to cascade impaction testing. A waste firing carriage 80 is mounted upon linear guide rails 82 for movement along the Y axis under the control of a pneumatic linear actuator 84. Upon the waste firing carriage 80 are:
(1) a device preparation utility mouthpiece 86 for interfacing with the mouthpiece 12 of the cascade impactor 10, to provide for leak and flow rate testing of the impactor. The device preparation utility mouthpiece 86 is mounted on a linear actuator 88 aligned along the X axis to enable it to be advanced into and retracted from the impactor mouthpiece 12, and incorporates a solenoid valve to enable flow rate setting, when it vents to the atmosphere, and leak testing, for which the valve is closed.
(2) the waste fire mouthpiece 76, which is positioned to interface with the mouthpiece of the device 1 and to collect waste doses from it. The waste fire mouthpiece communicates with a filter and filter chamber 90 for collecting particles in the waste doses, and via the filter chamber with a vacuum pump, which is not seen in Figure 3.
(3) the AFR mouthpiece 78, which is again positioned to interface with the mouthpiece of the device 1 and which is communicable with the vacuum pump via a differential pressure sensor 79.

The mouthpieces 86, 76 and 78 are spring loaded, so that when the device 1 is suitably positioned the relevant mouthpiece is spring biased against it with a reproducible and adjustable sealing force.

To explain the waste dose firing process in more detail, it should first be noted that the device 1 may for example contain 14, 28 or 60 doses. Dose access is sequential. To test blisters other than the first available, waste firing is performed until the desired blister is reached. Waste doses are not required for testing and are collected by means of the filter and filter chamber 90. Air is drawn through the waste fire mouthpiece 76 during waste firing to extract the dose and prevent build-up of powder on the device mouthpiece, which would otherwise potentially contaminate the test samples. The rate of air flow is tested and adjusted automatically to a user definable rate prior to each waste firing sequence, by adjustment of an analogue valve. To test the rate of air flow, the waste firing carriage 80 is withdrawn, the device transfer unit 62 is moved to align the rate testing utility mouthpiece 74 with the waste fire mouthpiece 76, and the waste firing carriage is advanced to mate the two mouthpieces. Air is drawn through the mouthpieces, the flow rate being measured, and the analogue valve is adjusted under software control to achieve the desired flow rate.

Once the air flow rate has been set, waste dose collection can begin. The waste firing carriage 80 and the device transfer unit 62 are moved to mate the waste fire mouthpiece 76 with the mouthpiece of the device 1. The device 1 is locked in place by means of the aforementioned overhead pneumatic clamp and is mechanically fired to release the test dose, as described above. The vacuum pump is used to draw air through the device for a chosen period, to withdraw the waste dose. The fire and extract cycle is repeated until the dose required for testing is reached.

The system is also able to test the airflow resistance of the device 1. In this process the device is first fired and the dose extracted and collected as just described. The device trigger is held in the "open" position. The waste firing carriage 80 is withdrawn, the device transfer unit aligns the device mouthpiece with the AFR mouthpiece 78, and the waste firing carriage 80 is advanced to mate the device and AFR mouthpieces, creating a leak proof seal by virtue of the spring biasing of the AFR mouthpiece 78. A chosen airflow rate is drawn through the device and its resistance is measured as a differential pressure across the sensor 79.

The device preparation utility mouthpiece 86 is used for leak testing and airflow rate testing the cascade impactor 10. Leak testing involves mating the utility mouthpiece 86 with the mouthpiece 12 of the cascade impactor 10, locking the device in place with the relevant overhead clamp, and then creating a partial vacuum in the cascade impactor 10 by drawing air from it with a vacuum pump, then sealing the impactor and monitoring pressure rise over a chosen period. Airflow rate testing of the impactor is carried out prior to collection of each sample. The utility mouthpiece 86 is presented to the mouthpiece 12 of the impactor, as before. The vacuum pump is enabled and draws air through the cascade impactor 10. A calibrated mass flow meter is used to measure the airflow rate and initial and final flow rates are recorded.

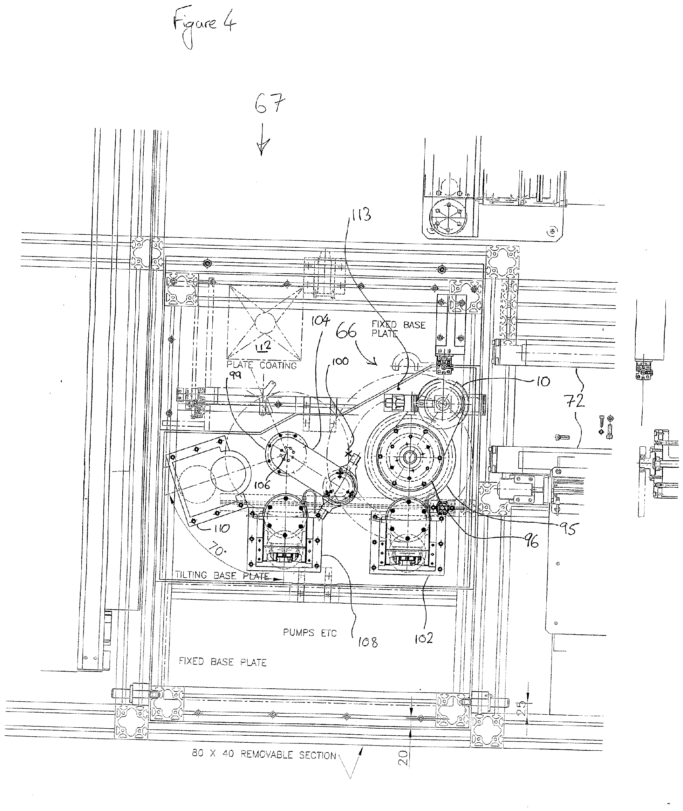

The function and operation of the cascade impaction subsystem 66 will now be described, with particular reference to Figure 4, beginning with the process of collection of a test dose in the cascade impactor 10. The mouthpiece of the device 1 is engaged with the mouthpiece 12 of the cascade impactor 10 by means of the device transfer unit 62, the device being rotated through 90 degrees by means of the rotary table as explained above, and is biased against the mouthpiece 12 with a chosen force using the transfer unit's torque control mode. The aforementioned pneumatic clamp applies force from above to the device 1 to maintain it in position. The device is then mechanically fired in the manner explained above, and a vacuum pump communicating with the conduit 24 leading from the final stage of the cascade impactor 10 (see Figure 1) is used to draw air through the device 1 and the impactor 10 for a chosen period. The test dose is drawn into the cascade impactor along with the air, in the form of an aerosol, and is collected - as described above - in the throat 14, preseparator 22 and stages A-I of the impactor. A single dose may be collected in the impactor 10 in this way or, according to user requirements and under software control, two or more such doses may be collected.

The cascade impactor 10 is then automatically disassembled and the sample material collected in the throat 14, preseparator 22 and stages A-I is separately recovered automatically by solvent washing processes. This process will now be described.

The first step of disassembly is to remove the throat 14 from the cascade impactor 10 and move it to a throat recovery station 92 (Figure 2). This is done using a manipulator comprising a five-axis gantry carrying a gripper which is movable along X, Y and Z directions, and rotatable about two axes. The manipulator is not illustrated, but suitable devices are well known to those skilled in the art. The gripper is adapted to hold both the throat 14 and the preseparator 22. To release the taper 16 through which the throat 14 engages with the cascade impactor 10, the throat is rotated about the gripper's first rotational axis as it is withdrawn. An alternative would be to adapt the impactor and throat to dispense with the taper and to use instead axially facing seals, which would not resist withdrawal of the throat. The transfer of the throat needs to be carried out in a manner which prevents material collected upon its internal surfaces from being dislodged and lost. To this end rotary motion of the gripper about its second axis (pitch) is used to turn the throat, once it is clear of the impactor, so that its elbow is lowermost and material cannot fall out of it. The throat recovery station 92 will be described below. The same manipulator is then used to disengage the preseparator 22 from the remainder of the cascade impactor 10 and transfer it to a preseparator recovery station 94, which again will be described below.

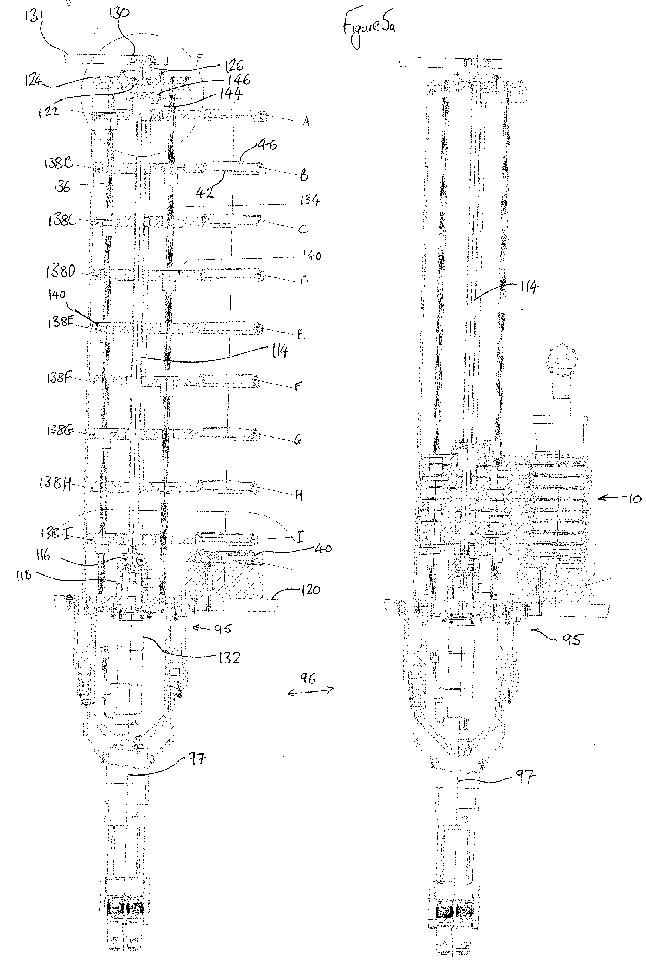

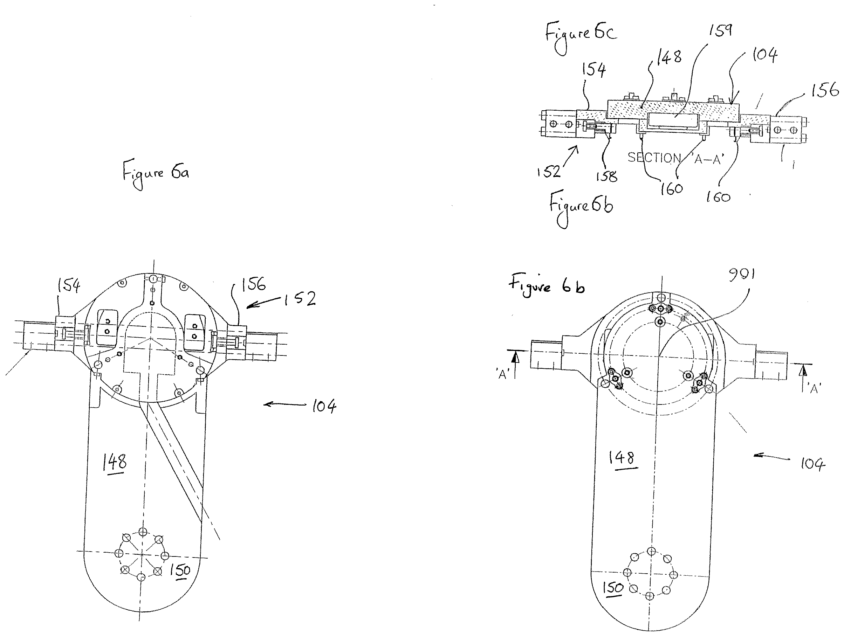

The recovery subsystem 67, by which the stacked stages and plates of the cascade impactor 10 are first separated, then solvent washed to recover the test material collected upon them, then further washed to clean them and finally dried and reassembled, is seen in Figure 2 but is shown in more detail in Figures 4-7. An expander device 96, seen in plan in Figure 4 and in side views in Figures 5a and 5b, is used to expand the stages A-I of the cascade impactor - i.e. to move each stage vertically apart from its neighbours above and below. The expander device sits upon a rotary table 95 having an axis 97 and is rotatable to place the cascade impactor 10 in three different positions - a collection position, in which it is indicated in phantom at 98 in Figure 4; a plate removal position indicated by a cross 100 in the same drawing; and a stage recovery position defined by a stage recovery station 102. The impaction plates 46 A-I are handled by a stack of plate-handling arms 104, one of which is illustrated in Figures 6 a-c, and which are mounted on a further rotary table 99 whose axis is indicated at 106. Rotation of this rotary table permits the plates to be moved between four positions - the plate removal position 100; a plate recovery position defined by a plate recovery station 108; a plate storage location defined by a plate storage station 110 and a plate coating position defined by a plate coating station 112. The stage and plate recovery stations 102, 108, and also the expander device 96 and the plate-handling arms 104, are all mounted upon a tilting base plate 113 which enables them to be inclined, under software control, about a horizontal axis, for reasons which will be explained below.

In Figure 5a the cascade impactor 10 is shown assembled. In Figure 5b, the expander device 96 has been used to expand - i.e. to disassemble - the stages A-I of the impactor. The expander device 96 has an upright, threaded lead screw 114 which lies along the device's rotational axis 97 and is rotatably mounted toward its lower end through rotary bearings 116 in a boss 118 of an expander base plate 120, and toward its upper end through a rotary bearing 122 in an expander top plate 124. The base 40 of the cascade impactor 10 is fixed to the expander base plate 120. A top plate boss 126 projects from the top plate into a further rotary bearing 130 to locate the top plate while allowing it to rotate along with the rest of the expander device upon its rotary table. The lead screw 114 is driven by an electric motor 132 suspended beneath the expander base plate 120. Extending between and bolted to the expander top plate 124 and the expander base plate 120, lying parallel to the lead screw 114 and on opposite sides of it, are front and rear guide rods 134, 136. For each stage A-I of the impactor 10 (and there are nine of them in the present embodiment) there is provided a respective expander arm 138 A-I. Each expander arm has three through-going apertures which respectively receive the lead screw 114 and the front and rear guide rods 134, 136. Each expander arm has a single flanged bush 140 which is a sliding fit upon one of the guide rods 134, 136, and the locations of the bushes alternate. That is to say, one arm has a bush 140 which rides upon the front guide rod 134, and the next has a bush which rides upon the rear guide rod 136. Each bush 140 projects beneath its expander arm 138 as seen at 142, so that in the assembled state (Figure 5a) each projects into the aligned aperture in the next arm down. The topmost expander arm 138A is linked through a pin 144 to a suspension boss 146 which is threadedly received upon the lead screw 114. The suspension boss is prevented from rotating by the pin 144 so that rotating the lead screw causes it to move up or down. The pin 144 is screwed into the expander arm 138A and passes upward from it through a flange of the suspension boss, terminating in an enlarged head above the said flange. In the assembled state (Figure 5a) there is some clearance between the head and the top surface of the flange, so that the suspension boss 146 moves a short distance before it begins to raise the expander arm 138A. Further pins of generally similar type, but greater length, link the topmost expander arm 138A to the arm 138B beneath, and each successive pair of arms below that. The pins are circumferentially staggered so that they do not foul each other, and consequently lie outside the plane of the drawing and are not seen. As the lead screw is driven to raise the suspension boss 146, successive expander arms 138A-I are suspended from the arm above and so raised, so that when the boss 146 is at the upper end of its travel all of the arms are vertically separated, as seen in Figure 5b. Each expander arm 138 projects forwardly beyond the front guide rod 134 to receive and embrace a respective impactor stage body 301. Hence in the expanded state the stage bodies are themselves expanded, and access is enabled to the impaction plates 46A-I resting upon them. Note that the stage filters 42 are fixed to the stage bodies 30.

The expanded stages of the cascade impactor 10 are moved to the plate removal position 100 by turning the rotary table 95 supporting the expander device 96. The plate-handling arms 104 are then moved to the same position and used to remove the impaction plates 46 from the impactor stages. Figures 6a-c show only a single plate-handling arm 104, but the system has an arm for each impactor stage, the arms being positioned one above another to align with the stages in the expanded impactor. Each has a radially extending cantilevered arm member 148 having a fixed inner end 150 and carrying at its opposite end a pneumatic engagement device 152 for picking and placing the impaction plate (which is omitted from these drawings). The device comprises an opposed pair of linear pneumatic actuators 154, 156 having downwardly projecting claws 158, 160 which are movable toward and away from each other. The actuators 154, 156 are vertically movable relative to the arm member 148 by means of a pneumatic bellows arrangement 158 which also carries downwardly projecting locating features 160. To grasp the impaction plate, the bellows arrangement is used to lower the actuators 154, 156 so that the locating features rest upon the plate, defining the required vertical position, and the claws 158, 160 are then advanced to engage the plate. This is done concurrently by each of the plate-handling arms 104, to engage each of the impaction plates 46A-I.

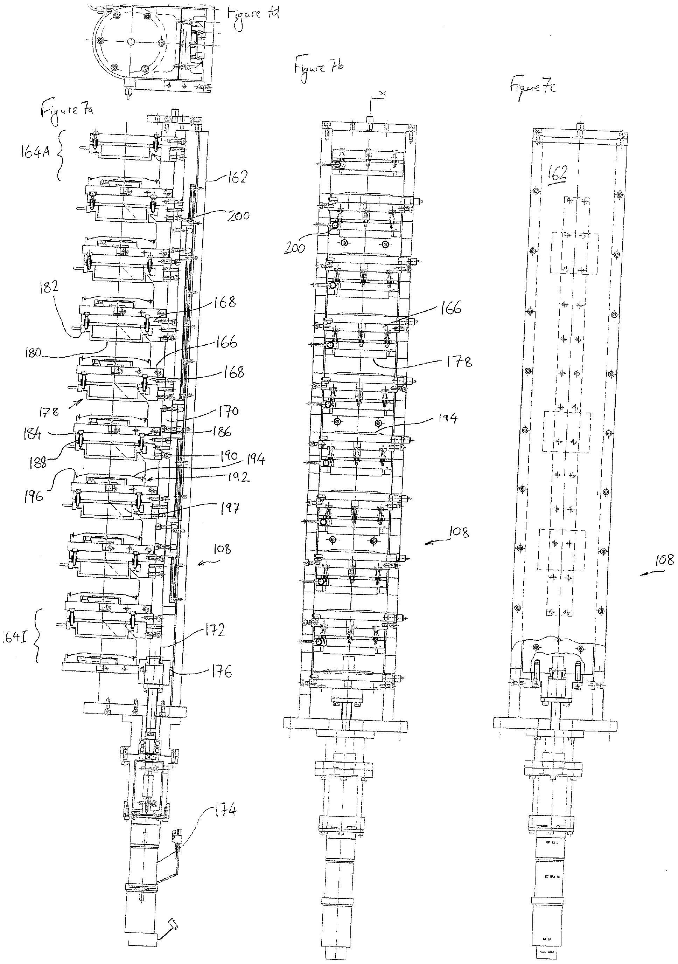

The impaction plates 46 and the stage bodies 30 are then conveyed to their respective recovery stations 102, 108. The stage recovery station 108 is best seen in Figures 7 a-d. The stage bodies are moved to it by rotating the expander device 96 using its rotary table 95. The stage recovery station 102 has an upright beam, referred to as a strongback 162, supporting respective stage recovery devices 164 for each of the impactor's stage bodies 30. In the present embodiment there are thus nine stage recovery devices 164A-I, arranged one above the other. Each comprises a fixed arm 166 carried upon the strongback 162 and a vertically movable arm 168 carried upon a vertically extending slider 170 which is slidably coupled to the strongback 162 to enable it to move up and down. A stage recovery lead screw 172 driven by an electric motor 174 threadedly engages a slider boss 176 to control vertical motion of the slider 170. Each movable arm 168 carries a downwardly facing upper space saver 178 having a circular boss 180 surrounded by an upper sealing rim 182. Each upper space saver 178 is bolted to the underside of its movable arm 168 at 184, 186, and is separated from it by springs 188, 190, allowing it to move upwardly somewhat against the springs. Each fixed arm 166 carries an upwardly facing lower space saver 192 shaped to provide a shallow frusto-conical portion 194 surrounded by a lower sealing rim 196. Limited vertical motion of the lower space saver is provided for by mounting it upon a pneumatic bellows arrangement 196.

In use, the impactor stage bodies 30, still carried in the expander arms 138, are positioned between the respective upper and lower space savers 178, 192. The stage recovery lead screw 172 is driven to bring the upper space savers 178 downward until their sealing rims 182 engage the upper surfaces of the stage bodies 30, the springs 188, 190 urging them into engagement therewith. The bellows 196 are pressurised to raise the lower space savers 192, bringing their sealing rims 196 into contact with the lower surfaces of the stage bodies. The interior of each stage body 30 A-I is thus placed in a closed chamber into which solvent etc. can be introduced through respective supply passages 200. Note that because the spaces savers 178, 192 fill most of the interior space of the stage bodies, the volume of solvent needed to flood the chambers is minimised.

After recovery of the test material by solvent washing, and cleaning and drying of the stage bodies 3 0 (which processes will be described below) the stage bodies 30 are released and returned to the plate removal position 100 for replacement of the impaction plates 46.

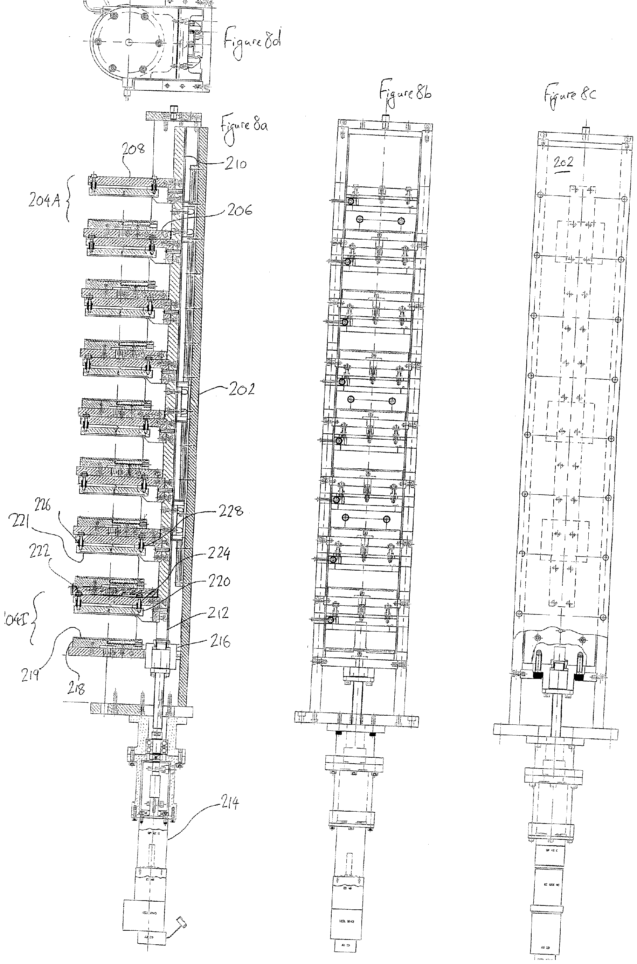

The plate recovery station 108 is best seen in Figures 8a-d. Like the stage recovery station, it has an upright strongback 202 carrying a respective plate recovery device 204A-I for each of the impaction plates. Each plate recovery device comprises a fixed arm 206 carried upon the strongback 202 and a movable arm 208 carried upon a slider 210 which is movable along the strongback by means of a lead screw 212 driven by a motor 214 and threadedly engaging with a slider boss 216 mounted on the slider. A respective lower receptacle plate 218 carried on each of the fixed arms 206 has a shallow circular depression 219 in its upper surface to receive the impaction plate. A respective upper receptacle plate 220 suspended from each movable arm through bolts 222, 224 and separated from it by springs 226, 228 disposed around the bolts has a complementary shallow depression 221 in its lower face. In use, the impaction plates 46 are placed in the depressions in the lower receptacle plates 218 by means of their respective p late-handling arms 104, and are then released from the arms which are moved to a safe position, then the upper receptacle plates 220 are brought down into contact with the lower receptacle plates. Each impaction plate is thus contained in a respective closed receptacle defined by the depressions 219, 221. The springs 226, 228 urge the receptacle plates together to maintain a seal. Solvent washing etc. is performed, then the upper receptacle plates are raised and the plate-handling arms are used to pick up the impaction plates 46 and move them to the next station.

Recall that the stage and plate recovery stations 102, 108, and associated components, are supported on a tilting base plate 113. The reason for this is to assist liquid removal from the recovery chambers formed around the stages and plates, these chambers being flat bottomed, so that while the chambers are liquid tends to spread across the entire chamber floor, making effective collection difficult. For liquid removal plate 113 is inclined - say at 45 degrees - so that liquid collects in the lowermost extremity of each chamber. The outlet from each such chamber is disposed in this lowermost extremity, making liquid removal more effective.

Processing of the impaction plates 46 is slower than processing of the stage bodies 30 because the former undergo a coating step, to be explained shortly. However, plate recovery and plate coating can be carried out simultaneously, and to avoid the plate processing limiting the speed of the whole operation, two sets of plates are used. When necessary, one set of impaction plates 46 is placed upon the plate storage station 110 using the plate-handling arms 104 whilst the other set is moved using the arms.

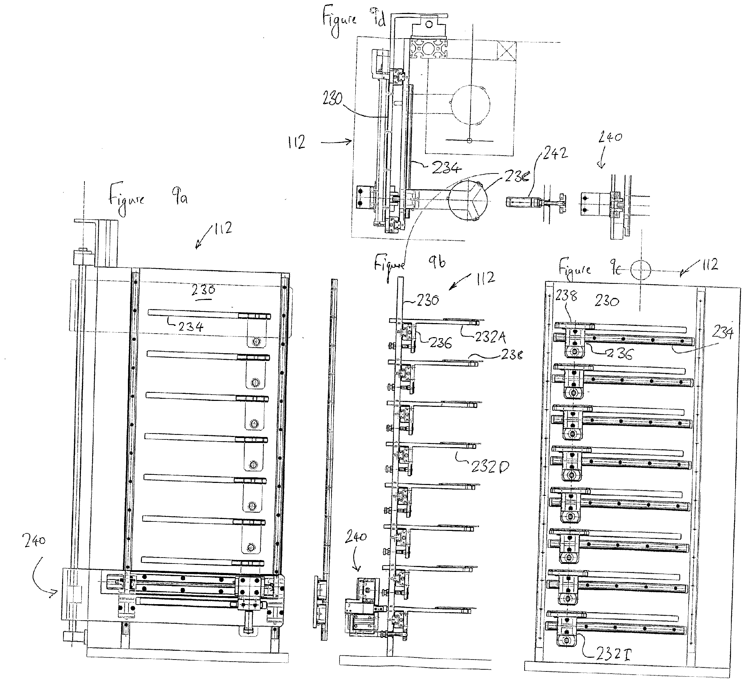

After recovery of the test material from the impaction plates 46, they are moved using the plate-handling arms 104 to the plate coating station 112. As mentioned above, some impaction tests require the impaction plates 46 to be pre-coated with a material such as silicone, to improve particle adhesion. The plate coating station, best seen in Figures 9a-d, comprises an upright rear panel 230 carrying a respective plate support arrangement 232 for each of the impaction plates 46, these arrangements being one above another to correspond with the heights of the plate-handling arms 104. Each comprises a horizontal guideway 234 slidably supporting a travelling support 236 movable along the guideway under software control and carrying a support plate 238 for receiving the impaction plate 46. A spray platform 240 supports a spray head 242 and is movable vertically along the rear panel 230 to bring the spray head to the level of each plate support arrangement 232 in turn. The relevant travelling support is then moved to pass its impaction plate 46 through the spray from the head 242 and cause it to be coated. After coating of all the impaction plates 46 they are returned to the stage bodies 30 for re-assembly of the cascade impactor 10.

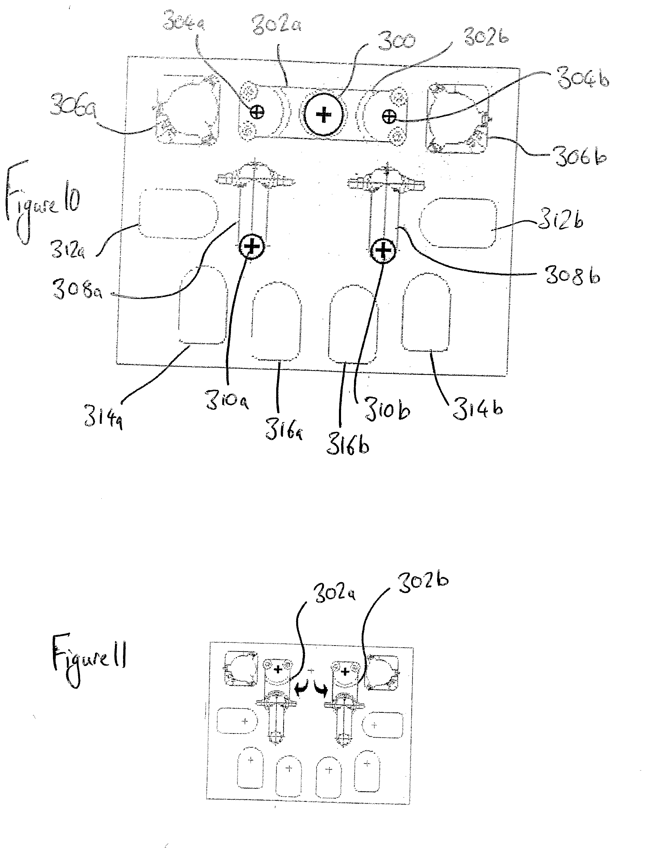

An alternative form of the recovery subsystem 67 is schematically depicted in Figures 10-19. Whereas in the version described above the impaction plates 46 and stage bodies 30 are all moved from station to station together, the Figure 9 version serves to split them into two sets (referred to as even and odd sets) which are separately, but concurrently, processed in respective stations.

In Figure 10 an expander device 300 is formed similarly to the expander device 96 already described, but has two sets of expander arms 302a,b which pivot about separate axes 304a,b and serve to carry the even and odd impactor stages respectively. Even and odd stage recovery stations 306a,b are positioned in reach of the expander arms 302a,b. Even and odd plate-handling arms 308a,b rotatable about axes 310a,b are positioned to receive the impaction plates 46 from the expander arms 302a,b and to move the impaction plates between:
(1) even and odd plate recovery stations 312a,b
(2) even and odd first set plate coating stations 314a,b and
(3) even and odd second set plate coating stations 316a,b.

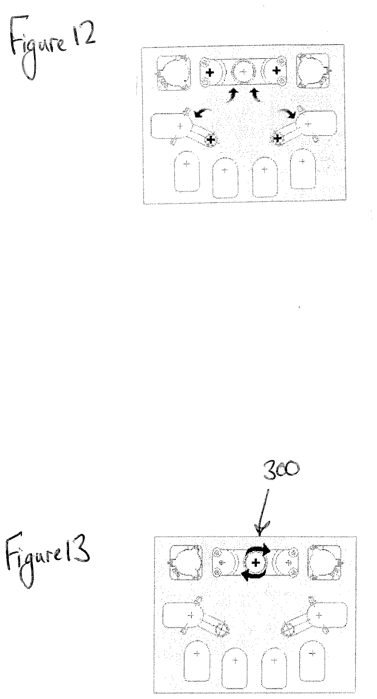

The sequence of operations is as follows. The stages bodies 30 (Figure 1), and the impaction plates 46 supported upon them, are expanded, then the even and odd stages are simultaneously moved ninety degrees on their respective expander arms 302a,b, the even stages moving clockwise and the odd stages anticlockwise, to their plate removal positions (Figure 11). The impaction plates 46 are picked up by the plate-handling arms 308a,b and moved to their respective recovery stations 312a,b (Figure 12).

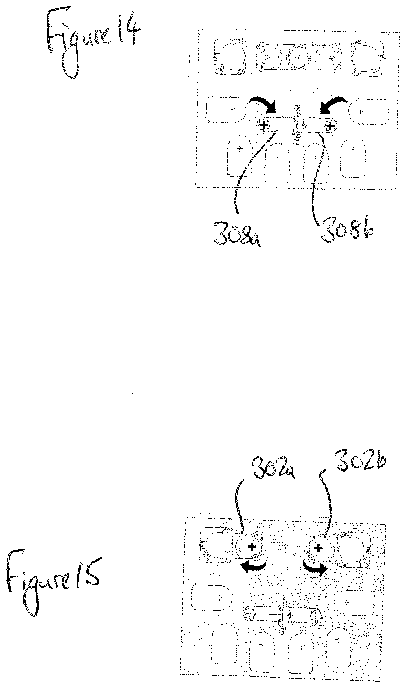

Note that at this point the even stage bodies 30 are on the same side of the apparatus as the odd impaction plates 46, since odd plates rest upon even bodies. To associate even stage bodies with even impaction plates and odd stage bodies with odd impaction plates, the whole expander device 300 is turned through 180 degrees on a rotary turntable (Figure 13). This assists in subsequently correctly combining assays from the stages and impaction plates. The plate-handling arms 308a,b are moved to safe positions (Figure 14) and the even and odd expander arms 302a,b are moved through 180 degrees, in opposite directions, to present the stage bodies 30 to their recovery stations, where recovery of test material, washing and drying are carried out (Figure 15).

The provision of two pairs of plate coating stations 314a,b and 316a,b enables two sets of impaction plates 46 to be used. After undergoing recovery, washing and drying at its recovery station, one set of impaction plates is moved to its coating station by means of the plate-handling arms 308a,b, then the other set, already coated and located in the other pair of coating stations, is picked up with the same arms. The coating stations in this embodiment.

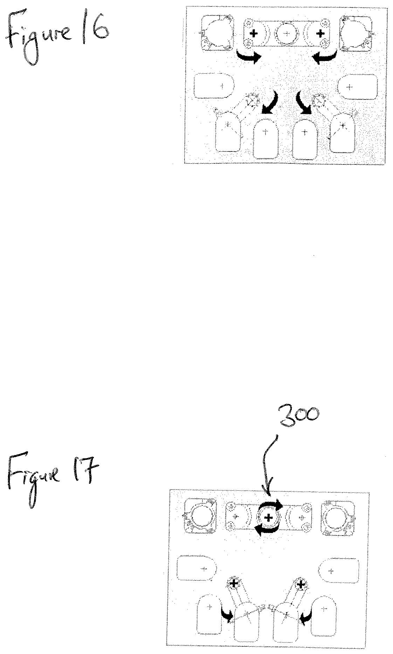

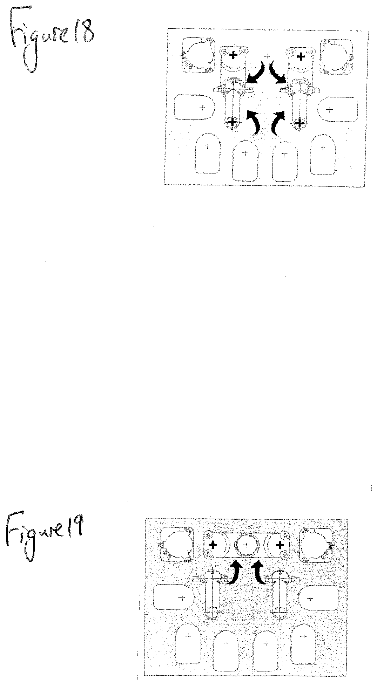

Re-assembly of the cascade impactor involves moving the stage bodies 30 back to the central assembly location (Figure 16), rotating the expander device 300 through 180 degrees to return it to its original position (Figure 17), returning the plates to the stage bodies (Figure 18) and again moving the stage bodies - now carrying the impaction plates - back to the central assembly location so that the impactor stages can be brought back together using the expander device (Figure 19).

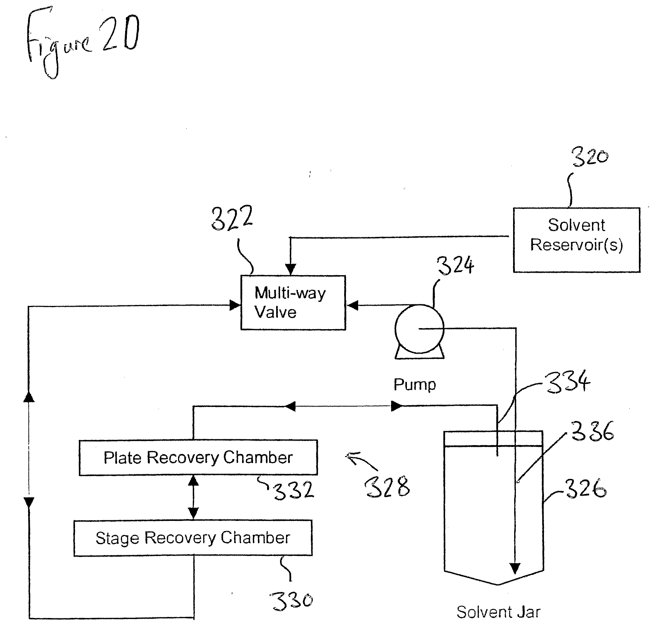

Figure 20 is a schematic representation of one of a set of fluid circuits used for the recovery process itself, during which the test material collected upon each impactor stage A-I is dissolved in a known quantity of solvent. The apparatus incorporates bulk solvent containers, one of which is represented at 320. Solvents to be used may include methanol, acetonitrile and water. A multi-way valve 322 is arranged to place the chosen solvent container 320 in communication with a metered pump 324. This is a displacement type pump which is able to supply a specified liquid volume, determined by the software. The pump used in the prototype system is accurate to 0.5%. The pump 324 draws a chosen volume of solvent into a reservoir 326, and the multi-way valve 322 is then switched to close a fluid circuit 328 for circulation of the solvent. The circuit includes a stage body recovery chamber, schematically represented in this drawing at 330, and the recovery chamber 332 for the corresponding impaction plate, as well as the pump 324 and the reservoir 326. The pump circulates solvent through this loop for a chosen period, which aids dissolution of the test material in solvent and ensures that the solution produced is homogeneous. At the end of this circulation, reversal of the pump ensures that all of the solution is returned to the reservoir 326. Note that although the reservoir has two ports 334, 336 only one - which serves as the outlet during circulation - reaches the fluid level in the reservoir, so that when the pump is reversed no fluid is removed from the reservoir. The tilting plate 113 is inclined, as explained above, to facilitate withdrawal of liquid from the recovery chamber. The solution thus collected in the reservoir 326 is representative of the material collected in the relevant stage of the cascade impactor 10.

This recovery process is carried out in parallel for all impactor stages A-I, and for the throat 14 and preseparator 22. Depending upon user requirements, the required connections may be simplified somewhat by grouping - and connecting - stages together, so that the resultant assay will contain material from multiple stages. Similarly, the throat 14 and preseparator 22 may be connected together during recovery to provide a single common assay.

Some test materials may require more than one solvent for recovery, and in this case the process can be repeated using a chosen dose of the second solvent, and a loop containing a second reservoir, although typically the two assays will then be combined. The solution is then ready for bulking or sampling, which will be described shortly.

The various components seen in Figure 20, and the impactor parts contained in the chambers 330 and 332, then need to be cleaned, particularly to prevent contamination of one sample by its predecessor. This is done by circulating solvent through the circuit and then pumping it to a waste container. The impactor components then need to be dried. This may be achieved using forced airflow. The recovery units would be opened and subject to localised air extraction to promote solvent evaporation. Alternatively, atmospheric drying may be sufficiently rapid, depending on the volatility of the solvent selected. Another option is to use a highly volatile solvent for the final wash, which will quickly evaporate off the impactor components. The solvent lines do not need to be dried, but are primed with solvent ready for the next cycle.

The term "bulking" used above refers to the process of combining two or more recovered solutions in a single assay. Using the multi-way valve 322, the pump 324 is connected to a chosen reservoir 326 and a small volume of the solution contained in it is pumped to waste to prime the lines. A metered quantity of the solution is then dispensed into a bulking pot. The process is repeated with one of more further solutions. Mixing is carried out by circulating the combined solutions in a closed loop.

Any suitable method may be used for analysis of the solutions. In practice, analysis typically involves some form of chromatography, such as high-pressure liquid chromatography (HPLC), an optical technique which is well known. In principle, such analysis could be carried out on a continuous basis by passing the bulked solutions through "in line" chromatographic devices. More typically, a separate automatic chromatography machine will be used, and the solutions will be passed to that machine in vials. Hence the product of a protracted run of the present system will be a large of solution-containing vials, which are stored in a rack and are place-encoded. That is, the position of the vial in the rack represents its content. Solutions are transferred from the reservoirs 326 to the vials (not shown) by a vialling unit, which is not shown but is of well-known type. A suitable unit is a two-axis device with multiple sampling needles or tips, the reservoirs being arranged so that the selected tips can all be simultaneously introduced to respective reservoirs, after which solution is drawn into each.

The tips are moved to the vial rack and inserted through self-sealing septum type vial lids, then a metered dose of each solution is discharged into the respective vial. Spaces may be left in the vial racks for calibrations and standards, to be inserted manually.

The system as a whole will typically be enclosed in a housing provided with air extraction, since some of the solvents used are both volatile and explosive, and with interlock protection against inappropriate user access.

## Claims

1. An expander device for (96) expanding a cascade impactor (10) of the type comprising multiple impactor stages (A-I) each comprising a respective stage body (30), the stage bodies being shaped to enable them to be assembled in a stack, locating one upon another, to form a conduit for through-flow of an aerosol sample, the stack having an axis, the expander device being **characterised in that** it comprises a respective arm member (138) for supporting each stage body, an arrangement (134, 136) for supporting the arm members such that they are movable along the direction of the said axis, and a mechanism (114, 132, 144) for moving the arm members away from each other along the direction of the said axis to separate the impactor stages from one another, and for moving them together along the direction of the said axis to re-assemble the impactor.

2. An expander device as claimed in claim 1 comprising a lead screw (114), a rotary lead screw drive (132), and at least one traveller (146) which engages the lead screw so as to be moved along the lead screw by rotation of it.

3. An expander device as claimed in claims 1 or claim 2, which is adapted to receive the impactor with its axis at least substantially upright, at least some of the arm members (138) having an extensible coupling to their neighbouring arm member, the extensible coupling being constructed to accommodate some relative motion of the neighbouring arm members but to prevent them from moving apart more than a maximum distance, so that raising the top-most arm member causes arm members beneath it to be suspended from it through the extensible couplings, and thereby to be separated from each other.

4. An expander device as claimed in claim 3 in which the extensible coupling comprises an elongate coupling member (144) which is coupled to one arm member and is movably received by the other, the elongate coupling member having a stop feature which limits its movement relative to the said other arm member to define the said maximum distance.

5. An expander device as claimed in claim 4 in which the elongate coupling member is a pin (144) with an enlarged head received in a bore in the said other arm member.

6. An expander device as claim in any preceding claim which is mounted for rotation about the said axis, or about an axis substantially parallel to the said axis, the stage bodies (30) being offset from the rotational axis so that by rotary movement of the device the stage bodies are movable from one processing station to another.

7. An expander device as claimed in any preceding claim which further comprises a support platform (40) for supporting the assembled impactor from beneath, the support platform being provided with a conduit (24) connectable to a vacuum source to cause the aerosol to be drawn through the impactor.

8. A system for automatic recovery of test material from a cascade impactor (10) of the type comprising multiple impactor stages (A-I) each comprising a respective stage body (36), the stage bodies being shaped to enable them to be assembled in a stack, locating one upon another, to form a conduit for through-flow of an aerosol sample, the stack having an axis, and the system comprising
an expander device (96) for separating the impactor stages from one another along the axial direction and supporting them in the resulting expanded configuration,
at least one recovery station (102, 108) having multiple recovery stages separated along the axial direction for receiving respective components of the impactor stages,
means for concurrently moving multiple components of the expanded impactor stages to the recovery station.

9. A system as claimed in claim 8 in which the expander device is mounted for rotation and provided with a powered drive, enabling it to move the impactor stages along a circular path to and from a recovery station.

10. A system as claimed in claim 8 or claim 9 for use with a cascade impactor (10) of the type in which the impactor stages (A-I) have respective impaction plates (46) supportable upon respective impactor stage bodies (30), the aforementioned recovery station (102) being a stage body recovery station for recovering material collected on the stage bodies and the system further comprising a plate recovery station (108) and a plate handling device comprising multiple plate handling arms (104) separated from each other along the axial direction, each plate handling arm having means (152) for engaging a respective impaction plate, the plate handling device thus being adapted to engage multiple impaction plates and to move them concurrently to the plate recovery station.

11. A system as claimed in any of claims 8 to 10 further comprising a firing arrangement (62) for firing a dispensing device (1) into the impactor, the firing arrangement comprising an automated mechanical arrangement (68) for presenting the dispensing device to a mouthpiece (12) of the cascade impactor, a pump for providing a partial vacuum, and an arrangement of valves and conduits (24) for connecting the pump to an outlet of the cascade impactor to cause air to be drawn through the impactor and the device.

12. A system as claimed in claim 10 or claim 11 which comprises a waste firing station (64) for firing unwanted doses from the dispensing device and a platform (68), the said platform being arranged to move the device between the waste firing station and the firing arrangement.

13. A system as claimed in any of claims 8 to 12 which further comprises a throat recovery station (92) and a handling system for removing a throat from the cascade impactor and conveying it to the throat recovery station.

14. A system as claimed in claim 13 which further comprises a preseparator recovery station (94), the handling system being suitable for removing a preseparator (22) from the cascade impactor and conveying it to the preseparator recovery station.

15. A system as claimed in any of claims 8 to 14 in which the or each recovery station defines multiple recovery chambers and each recovery chamber is connectable to a closed fluid circuit (328) comprising a fluid reservoir (326), a pumping device (324) and one or more recovery chambers (330, 332), enabling fluid to be circulated around the closed loop, via the reservoir and recovery chamber(s), to cause collected material to pass into the liquid and be homogenised.

## Patentansprüche

1. Eine Expandervorrichtung zum (96) Expandieren eines Kaskadenimpaktors (10) von dem Typ, der mehrere Impaktorstadien (A-I) beinhaltet, die jeweils einen entsprechenden Stadiumkörper (30) beinhalten, wobei die Stadiumkörper so gestaltet sind, dass sie in einem Stapel zusammengebaut werden können, wobei sich einer auf dem anderen befindet, um eine Rohrleitung für den Durchfluss einer Aerosolprobe zu bilden, wobei der Stapel eine Achse aufweist, wobei die Expandervorrichtung **dadurch gekennzeichnet ist, dass** sie jeweils ein Armelement (138) zum Stützen jedes Stadiumkörpers, eine Anordnung (134, 136) zum Stützen der Armelemente, sodass sie entlang der Richtung der Achse beweglich sind, und einen Mechanismus (114, 132, 144) zum Bewegen der Armelemente voneinander weg entlang der Richtung der Achse beinhaltet, um die Impaktorstadien voneinander zu trennen und um sie zusammen entlang der Richtung der Achse zu bewegen, um den Impaktor wieder zusammenzubauen.

2. Expandervorrichtung gemäß Anspruch 1, die eine Bewegungsschraube (114), einen Rotations-Bewegungsschraubenantrieb (132) und mindestens einen Läufer (146) beinhaltet, der Eingriff mit der Bewegungsschraube nimmt, um somit entlang der Bewegungsschraube durch deren Rotation bewegt zu werden.

3. Expandervorrichtung gemäß Ansprüchen 1 oder Anspruch 2, die dazu angepasst ist, den Impaktor mit seiner mindestens im Wesentlichen aufrechten Achse aufzunehmen, wobei mindestens einige der Armelements (138) eine ausziehbare Kopplung mit ihrem benachbartem Armelement aufweisen, wobei die ausziehbare Kopplung so konstruiert ist, dass sie Platz für eine gewisse relative Bewegung der benachbarten Armelemente bietet, aber verhindert, dass sie sich mehr als eine maximale Entfernung auseinanderbewegen, so dass das Anheben des obersten Armelements dazu führt, dass die Armelemente darunter durch die ausziehbaren Kopplungen von diesem herunterhängen und dadurch voneinander getrennt werden.

4. Expandervorrichtung gemäß Anspruch 3, wobei die ausziehbare Kopplung ein längliches Kopplungselement (144) beinhaltet, das mit einem Armelement gekoppelt ist und beweglich von dem anderen aufgenommen wird, wobei das längliche Kopplungselement einen Anschlag aufweist, der seine Bewegung relativ zu dem anderen Armelement einschränkt, um die maximale Entfernung zu definieren.

5. Expandervorrichtung gemäß Anspruch 4, wobei das längliche Kopplungselement ein Stift (144) mit einem vergrößerten Kopf ist, der in einer Bohrung des anderen Armelements aufgenommen wird.

6. Expandervorrichtung gemäß einem der vorhergehenden Ansprüche, die zur Rotation um die Achse oder um eine Achse, die im Wesentlichen parallel zu der Achse ist, montiert ist, wobei die Stadiumkörper (30) von der Rotationsachse versetzt sind, sodass die Stadiumkörper durch die Drehbewegung der Vorrichtung von einer Verarbeitungsstation zur anderen beweglich sind.

7. Expandervorrichtung gemäß einem der vorhergehenden Ansprüche, die ferner eine Stützplattform (40) zum Stützen des zusammengebauten Impaktors von unten beinhaltet, wobei die Stützplattform mit einer Rohrleitung (24) versehen ist, die mit einer Vakuumquelle verbunden werden kann, um zu veranlassen, dass das Aerosol durch den Impaktor gezogen wird.

8. Ein System für die automatische Rückgewinnung von Prüfmaterial aus einem Kaskadenimpaktor (10) von dem Typ, der mehrere Impaktorstadien (A-I) beinhaltet, die jeweils einen entsprechenden Stadiumkörper (36) beinhalten, wobei die Stadiumkörper so gestaltet sind, dass sie in einem Stapel zusammengebaut werden können, wobei sich einer auf dem anderen befindet, um eine Rohrleitung für den Durchfluss einer Aerosolprobe zu bilden, wobei der Stapel eine Achse aufweist, und das System Folgendes beinhaltet:
eine Expandervorrichtung (96), um die Impaktorstadien entlang der Achsenrichtung voneinander zu trennen und sie in der sich daraus ergebenden expandierten Konfiguration zu stützen,
mindestens eine Rückgewinnungsstation (102, 108) mit mehreren Rückgewinnungsstadien, die entlang der Achsenrichtung getrennt sind, zum Aufnehmen der jeweiligen Komponenten der Impaktorstadien,
Mittel zum gleichzeitigen Bewegen mehrerer Komponenten der expandierten Impaktorstadien zu der Rückgewinnungsstation.

9. System gemäß Anspruch 8, wobei die Expandervorrichtung zur Rotation montiert ist und mit einem Motorantrieb versehen ist, der es ihr ermöglicht, die Impaktorstadien entlang eines kreisförmigen Wegs zu und von einer Rückgewinnungsstation zu bewegen.

10. System gemäß Anspruch 8 oder Anspruch 9 zur Verwendung mit einem Kaskadenimpaktor (10) von dem Typ, in dem die Impaktorstadien (A-I) jeweils Impaktionsplatten (46) aufweisen, die auf jeweiligen Impaktorstadiumkörpern (30) gestützt werden können, wobei die zuvor genannte Rückgewinnungsstation (102) eine Stadiumkörper-Rückgewinnungsstation zum Rückgewinnen von auf den Stadiumkörpern gesammeltem Material ist und das System ferner eine Platten-Rückgewinnungsstation (108) und eine Plattenbearbeitungsvorrichtung beinhaltet, die mehrere Plattenbearbeitungsarme (104) beinhaltet, die entlang der Achsenrichtung voneinander getrennt sind, wobei jeder Plattenbearbeitungsarm Mittel (152) aufweist, um eine jeweilige Impaktionsplatte in Eingriff zu nehmen, wobei die Plattenbearbeitungsvorrichtung somit zur Eingriffnahme mit mehreren Impaktionsplatten und zu deren gleichzeitiger Bewegung zu der Platten-Rückgewinnungsstation angepasst ist.

11. System gemäß einem der Ansprüche 8 bis 10, das ferner eine Ausstoßanordnung (62) zum Ausstoßen einer Abgabevorrichtung (1) in den Impaktor beinhaltet, wobei die Ausstoßanordnung Folgendes beinhaltet: eine automatisierte mechanische Anordnung (68), um die Abgabevorrichtung einem Mundstück (12) des Kaskadenimpaktors zu präsentieren, eine Pumpe, um ein Teilvakuum bereitzustellen, und eine Anordnung von Ventilen und Rohrleitungen (24), um die Pumpe mit einem Auslass des Kaskadenimpaktors zu verbinden, um zu veranlassen, dass Luft durch den Impaktor und die Vorrichtung gezogen wird.

12. System gemäß Anspruch 10 oder Anspruch 11, das eine Abfallausstoß-Station (64) zum Ausstoßen unerwünschter Dosen aus der Abgabevorrichtung und eine Plattform (68) beinhaltet, wobei die Plattform dazu angeordnet ist, die Vorrichtung zwischen der Abfallausstoß-Station und der Ausstoßanordnung zu bewegen.

13. System gemäß einem der Ansprüche 8 bis 12, das ferner eine Engpass-Rückgewinnungsstation (92) und ein Bearbeitungssystem beinhaltet, um einen Engpass aus dem Kaskadenimpaktor zu entfernen und ihn zu der Hals-Rückgewinnungsstation zu befördern.

14. System gemäß Anspruch 13, das ferner eine Vorabscheider-Rückgewinnungsstation (94) beinhaltet, wobei das Bearbeitungssystem dazu geeignet ist, einen Vorabscheider (22) von dem Kaskadenimpaktor zu entfernen und ihn zu der Vorabscheider-Rückgewinnungsstation zu befördern.

15. System gemäß einem der Ansprüche 8 bis 14, wobei die oder jede Rückgewinnungsstation mehrere Rückgewinnungskammern definiert und jede Rückgewinnungskammer mit einem geschlossenen Fluidkreislauf (328) verbunden werden kann, der ein Fluidreservoir (326), eine Pumpvorrichtung (324) und eine oder mehrere Rückgewinnungskammern (330, 332) beinhaltet, wodurch das Zirkulieren von Fluid um die geschlossene Schleife über das Reservoir und die Rückgewinnungskammer(n) ermöglicht wird, um zu veranlassen, dass gesammeltes Material in die Flüssigkeit gelangt und homogenisiert wird.

## Revendications

1. Dispositif d'expansion (96) pour l'expansion d'un impacteur en cascade (10) du type comprenant de multiples étages d'impacteur (A-I) chacun comprenant un corps d'étage respectif (30), les corps d'étages étant conformés de manière à permettre leur assemblage en un empilement, les uns sur les autres, pour former un conduit au travers duquel s'écoule un échantillon d'aérosol, l'empilement ayant un axe, le dispositif d'expansion étant **caractérisé en ce qu'**il comprend un élément de bras respectif (138) pour supporter chaque corps d'étage, un agencement (134, 136) pour supporter les éléments de bras de telle sorte qu'ils puissent se déplacer dans le sens dudit axe, et un mécanisme (114, 132, 144) pour écarter les éléments de bras les uns des autres dans le sens dudit axe afin de séparer les étages d'impacteur les uns des autres, et pour les rapprocher dans le sens dudit axe pour réassembler l'impacteur.

2. Dispositif d'expansion selon la revendication 1 comprenant une vis mère (114), un entraînement rotatif de vis mère (132), et au moins un curseur (146) en prise avec la vis mère de manière à être déplacé le long de la vis mère par rotation de celle-ci.

3. Dispositif d'expansion selon les revendications 1 ou la revendication 2, lequel est adapté pour recevoir l'impacteur avec son axe au moins sensiblement vertical, au moins certains des éléments de bras (138) présentant un couplage extensible avec leur élément de bras voisin, le couplage extensible étant construit pour permettre un certain déplacement relatif des éléments de bras voisins mais les empêcher de s'écarter par plus d'une distance maximum, si bien qu'une élévation de l'élément de bras situé le plus haut entraîne la suspension à celui-ci des éléments de bras situés en dessous de lui par le biais des couplages extensibles, et ainsi leur séparation les uns des autres.

4. Dispositif d'expansion selon la revendication 3 dans lequel le couplage extensible comprend un élément de couplage allongé (144) qui est couplé à un élément de bras et est reçu de manière mobile par l'autre, l'élément de couplage allongé présentant une butée qui limite son mouvement par rapport audit autre élément de bras pour définir ladite distance maximum.

5. Dispositif d'expansion selon la revendication 4 dans lequel l'élément de couplage allongé est une broche (144) présentant une tête élargie reçue dans un alésage dans ledit autre élément de bras.

6. Dispositif d'expansion selon l'une quelconque des revendications précédentes monté pour tourner autour dudit axe, ou autour d'un axe sensiblement parallèle audit axe, les corps d'étages (30) étant décalés par rapport à l'axe de rotation de telle sorte que par un mouvement rotatif du dispositif les corps d'étages soient déplaçables d'un poste de traitement à un autre.

7. Dispositif d'expansion selon l'une quelconque des revendications précédentes comprenant en outre une plate-forme de support (40) pour supporter l'impacteur assemblé par le dessous, la plate-forme de support étant dotée d'un conduit (24) pouvant être raccordé à une source de vide pour aspirer l'aérosol à travers l'impacteur.

8. Système de récupération automatique d'une matière de test à partir d'un impacteur en cascade (10) du type comprenant de multiples étages d'impacteur (A-I) chacun comprenant un corps d'étage respectif (36), les corps d'étages étant conformés de manière à permettre leur assemblage en un empilement, les uns sur les autres, pour former un conduit au travers duquel s'écoule un échantillon d'aérosol, l'empilement ayant un axe, et le système comprenant
un dispositif d'expansion (96) pour séparer les étages d'impacteur les uns des autres dans le sens axial et les supporter dans la configuration expansée résultante,
au moins un poste de récupération (102, 108) présentant de multiples étages de récupération séparés dans le sens axial pour recevoir des composants respectifs des étages d'impacteur,
un moyen de déplacement simultané de multiples composants des étages d'impacteur expansés jusqu'au poste de récupération.

9. Système selon la revendication 8 dans lequel le dispositif d'expansion est monté pour tourner et est doté d'un entraînement motorisé lui permettant de déplacer les étages d'impacteur le long d'une trajectoire circulaire vers et depuis un poste de récupération.

10. Système selon la revendication 8 ou la revendication 9 destiné à être utilisé avec un impacteur en cascade (10) du type dans lequel les étages d'impacteur (A-I) présentent des plaques d'impacteur respectives (46) pouvant être supportées sur des corps d'étages d'impacteur respectifs (30), le poste de récupération (102) susmentionné étant un poste de récupération de corps d'étages destiné à récupérer une matière collectée sur les corps d'étages et le système comprenant en outre un poste de récupération de plaques (108) et un dispositif de manutention de plaques comprenant de multiples bras de manutention de plaques (104) séparés les uns des autres dans le sens axial, chaque bras de manutention de plaque présentant un moyen (152) pour se mettre en prise avec une plaque d'impacteur respective, le dispositif de manutention de plaques étant ainsi adapté pour venir en prise avec de multiples plaques d'impacteur et les déplacer simultanément jusqu'au poste de récupération de plaques.

11. Système selon l'une quelconque des revendications 8 à 10 comprenant en outre un agencement de percussion (62) pour percuter un dispositif de distribution (1) dans l'impacteur, l'agencement de percussion comprenant un agencement mécanique automatisé (68) pour présenter le dispositif de distribution à une embouchure (12) de l'impacteur en cascade, une pompe pour assurer un vide partiel, et un agencement de valves et de conduits (24) pour connecter la pompe à une sortie de l'impacteur en cascade afin d'entraîner l'aspiration d'air à travers l'impacteur et le dispositif.

12. Système selon la revendication 10 ou la revendication 11 lequel comprend un poste de percussion de déchets (64) pour percuter des doses non voulues du dispositif de distribution et une plate-forme (68), ladite plate-forme étant agencée pour déplacer le dispositif entre le poste de percussion de déchets et l'agencement de percussion.

13. Système selon l'une quelconque des revendications 8 à 12 lequel comprend en outre un poste de récupération de gorge (92) et un système de manutention pour retirer une gorge de l'impacteur en cascade et l'acheminer jusqu'au poste de récupération de gorge.

14. Système selon la revendication 13 lequel comprend en outre un poste de récupération de préséparateur (94), le système de manutention étant adapté pour retirer un préséparateur (22) de l'impacteur en cascade et l'acheminer jusqu'au poste de récupération de préséparateur.

15. Système selon l'une quelconque des revendications 8 à 14 dans lequel le ou chaque poste de récupération définit de multiples chambres de récupération et chaque chambre de récupération peut être raccordée à un circuit fermé de fluide (328) comprenant un réservoir de fluide (326), un dispositif de pompage (324) et une ou plusieurs chambres de récupération (330, 332), permettant au fluide de circuler à travers la boucle fermée, par l'intermédiaire du réservoir et de la ou des chambres, de manière à entraîner le passage dans le liquide du matériau collecté et son homogénéisation.
